Europäisches Patentamt

(19) European Patent Office

Office européen des brevets

(11) Numéro de publication: **0 068 971 B1**

(12) **FASCICULE DE BREVET EUROPEEN**

(45) Date de publication du fascicule du brevet:
21.08.85

(21) Numéro de dépôt: **82401088.8**

(22) Date de dépôt: **15.06.82**

(51) Int. Cl.⁴: **G 01 F 23/02**

(54) **Voyant indicateur de niveau d'un liquide contenu dans une enceinte close, et cuve de compresseur hermétique munie d'un tel voyant.**

(30) Priorité: **19.06.81 FR 8112140**

(43) Date de publication de la demande:
**05.01.83 Bulletin 83/1**

(45) Mention de la délivrance du brevet:
**21.08.85 Bulletin 85/34**

(84) Etats contractants désignés:
**BE DE FR IT**

(56) Documents cités:
**DE - A - 1 648 121**
**DE - B - 1 002 961**
**DE - B - 1 107 409**
**US - A - 2 917 924**
**US - A - 3 434 346**

(73) Titulaire: **L'UNITE HERMETIQUE S.A., Route de Lyon, F-38290 La Verpilliere (FR)**

(72) Inventeur: **Bergeron, Emile, THOMSON-CSF SCPI 173, bld Haussmann, F-75379 Paris Cedex 08 (FR)**

(74) Mandataire: **Grynwald, Albert et al, THOMSON-CSF SCPI 173, Bld Haussmann, F-75379 Paris Cedex 08 (FR)**

BUNDESDRUCKEREI BERLIN

**Description**

La présente invention a pour objet un voyant indicateur de niveau permettant la visualisation du niveau d'un liquide dans une enceinte close et une cuve de compresseur hermétique munie d'un tel voyant.

En effet, de telles cuves hermétiques contiennent une certaine quantité de liquide, en général sous pression, dont il faut pouvoir vérifier le niveau de façon aussi précise que possible.

Cependant, les voyants de type connu sont constitués généralement d'un manchon cylindrique de section circulaire, d'axe horizontal, et fixé à l'une de ses extrémités, de façon rigide et étanche, sur la paroi latérale de la cuve et fermé, à l'autre extrémité, par une paroi transparente étanche (voir p.ex. DE-B-1 107 409).

Ces voyants de type connu ont l'inconvénient de donner une indication erronée du niveau du liquide que l'on souhaite contrôler, un ménisque, dont l'importance dépend de la viscosité du fluide, se formant sur la paroi transparente du voyant.

Le voyant indicateur de niveau objet de la présente invention ne présente pas cet inconvénient.

Par les documents US-A-3 434 346 et US-A-2 917 924 sont connus des voyants indicateurs utilisant des caprules de fermes hémisphériques, qui permettent une lecture non errouée.

L'invention est définie par les revendications principales 1 et 16. Des mades particuliers de réalisation de l'invention se trouvent dans les revendications dépendantes 2 à 15.

L'invention sera mieux comprise et d'autres caractéristiques apparaîtront à l'aide de la description ci-après et des dessins qui l'accompagnent et sur lesquels:

Les figures 1 et 2 représentent schématiquement, en coupe longitudinale et en coupe transversale respectivement, un voyant indicateur de niveau de type connu.

La figure 3 représente un exemple de réalisation d'un voyant indicateur de niveau suivant l'invention.

La figure 4 montre une section droite du manchon du voyant indicateur de niveau de la figure 3.

La figure 5 montre, en coupe transversale, un manchon muni d'un écran de visualisation.

Les figures 6 et 7 représentent respectivement, en vue éclatée et en coupe longitudinale, un autre exemple de réalisation d'un voyant indicateur de niveau suivant l'invention.

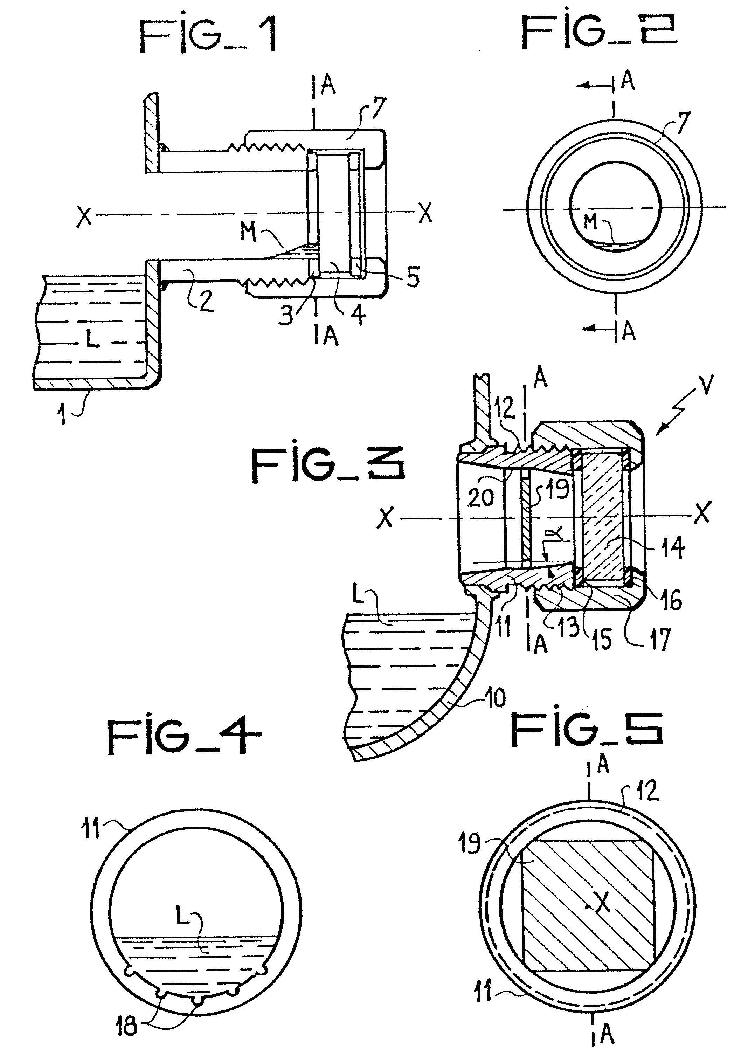

Le voyant indicateur de niveau de type connu, montré schématiquement en figures 1 et 2, comprend un manchon 2 cylindrique, d'axe XX horizontal, fixé par l'une de ses extrémités, de façon étanche, sur une enceinte 1 contenant un liquide L sous pression. Une paroi 4 transparente obture, de façon étanche, l'autre extrémité du manchon 2. Lorsque le niveau du liquide L s'abaisse dans l'enceinte 1, au-dessous du manchon 2, une portion M de ce liquide L reste plaquée contre la paroi 4 transparente en raison de la viscosité du liquide L. Cette portion M de liquide L forme un ménisque, visible sur la figure 2, qui fournit alors une lecture erronée du niveau du liquide L dans l'enceinte 1 étanche.

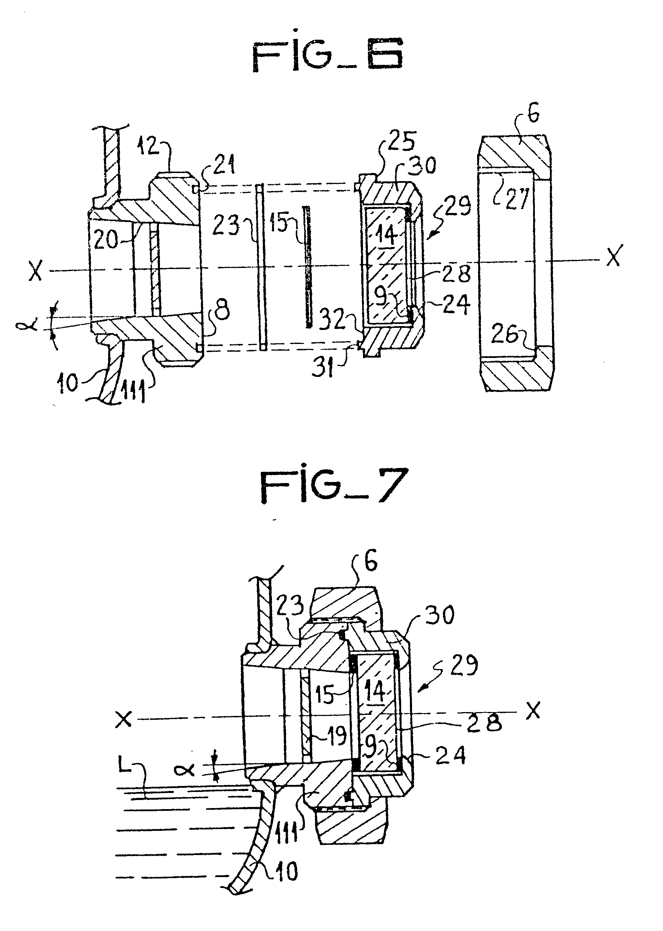

La figure 3 montre un exemple de réalisation d'un voyant indicateur de niveau de liquide suivant l'invention, la structure de ce voyant permettant d'éviter toute erreur de lecture.

Ce voyant V comporte un manchon 11 fixé de façon rigide et étanche (par brasure par exemple) sur une enceinte 10 hermétique, une cuve de compresseur par exemple. Ce manchon 11 cylindrique, de section circulaire et d'axe XX horizontal comporte, à son extrémité libre, un filetage 12 extérieur, périphérique. Sur la face libre de cette extrémité vient s'appliquer une paroi 14 transparente formée d'un disque épais en matériau transparent, du verre par exemple. Deux joints 15, 16 d'étanchéité, de forme annulaire, sont placés de part et d'autre du disque 14 transparent qui est immobilisé au moyen d'un écrou 17 de serrage dont le taraudage 13 est prévu pour qu'il puisse venir se visser sur le filetage 12, réalisant ainsi une fermeture étanche du manchon 11. Le manchon 11 présente intérieurement la forme d'un tronc de cône (avec rainures) allant en s'élargissant vers l'enceinte 10, l'angle $\alpha$ de ses génératrices avec l'axe XX du manchon étant déterminé en fonction de la viscosité du liquide L contenu dans l'enceinte 10 et de la pression existant dans cette enceinte 10.

La conicité de la paroi interne du manchon 11 a pour but de créer une pente assurant, dans le cas d'une baisse de niveau du liquide L au-dessous de la partie inférieure de ce manchon 11, le retour total du liquide dans l'enceinte 10, comme montré en figure 3.

Il est à remarquer, d'autre part, que l'angle $\pi/2+\alpha$ formé par le disque 14 transparent et la paroi intérieure conique du manchon 11 modifie la mouillabilité de la face interne de ce disque 14.

L'évacuation totale du liquide hors du manchon 11 est facilitée par les rainures 18 longitudinales réalisées dans la partie inférieure au moins de la paroi intérieure du manchon 11, comme le montre la figure 4. Ces rainures 18 auront de préférence une section semi-cirulaire.

Afin d'améliorer la visualisation du niveau du liquide L à travers le disque 14 transparent et éviter le phénomène de »trou noir« en favorisant la réflexion des rayons lumineux venant de l'extérieur, un écran 19 est placé dans le manchon 11 perpendiculairement à l'axe XX de ce manchon 11. Cet écran 19 a la forme d'un polygone dont les angles, abattus, viennent s'appliquer sur la paroi interne du manchon 11. Dans l'exemple représenté figure 5, l'écran 19 est une plaque carrée (les rainures n'ont pas été indiquées).

Le positionnement de cet écran 19 dans le manchon 11 peut être facilité par un alésage 20 cylindrique, de profondeur sensiblement égale à l'épaisseur de l'écran 19, comme le montre la figure 3.

L'écran 19 réalisé en un matériau rigide, non transparent, de couleur claire, peut être introduit »à force« dans la partie du manchon 11 comportant l'alésage 20.

Dans ce premier exemple de réalisation qui vient d'être décrit, le disque 14 transparent est immobilisé entre le manchon 11 et l'écrou 17 coiffant le disque 14, les joints 15, 16 annulaires d'étanchéité assurant des contacts souples.

Cependant, dans certaines utilisations, en particulier lorsque le voyant est monté sur une enceinte hermétique de compresseur, il peut être intéressant d'associer, au moins à un de ces contacts élastiques, un contact rigide permettant d'éviter, au moment du montage, un écrasement trop important du joint correspondant et éliminer ainsi les possibilités de fuite de liquide au niveau de ce joint après un certain temps d'utilisation du compresseur.

La figure 6 représente, en vue éclatée, un autre exemple de réalisation d'un voyant indicateur de niveau d'un liquide suivant l'invention, dans lequel un contact rigide limite la pression créée sur un joint 15 d'étanchéité disposé entre l'extrémité 8 d'un manchon 111 et une paroi 14 transparente.

Ce voyant comprend de plus:

— une cuvette 30, métallique par exemple, ayant un rebord 32 et présentant une cavité intérieure destinée à recevoir la paroi 14 transparente, cette cuvette 30 étant munie d'une ouverture 29 de visualisation opposée au rebord 32;

— un écrou 6 dont le fond de l'alésage taraudé présente un rebord 26 qui peut venir s'appuyer sur un épaulement 25 de la cuvette 30 lorsque l'écrou 6 est vissé sur le manchon 111 muni d'un filetage 12 extérieur prévu à cet effet, de façon à immobiliser la cuvette 30 munie de la paroi 14 transparente.

Le manchon 111 présente, sur sa face 8 opposée à l'enceinte 10, une gorge 21 annulaire dans laquelle peut être introduit un joint 23 annulaire d'étanchéité, réalisé en nylon par exemple.

La cuvette 30 portant la paroi 14 transparente est munie, sur son rebord 32, d'une saillie 31 annulaire de dimensions telles qu'elle puisse être placée dans la gorge 21 du manchon 111 et assurer le centrage de la cuvette 30 par rapport à ce manchon 111.

Dans l'exemple de réalisation du voyant indicateur de niveau montré en figures 6 et 7, l'épaisseur de la paroi 14 transparente, qui est un disque en verre par exemple, est inférieure à la profondeur de la cavité de la cuvette 30. Un ou plusieurs joints 8 annulaires, en matériau élastique, sont prévus pour être placés dans la cuvette 30, contre la paroi 14 transparente logée dans cette cuvette 30. L'épaisseur de ce joint 8 (ou de ces joints 8) est telle qu'il dépasse le rebord 32 de cette cuvette 30.

Un autre joint 9 annulaire, qui peut être réalisé par exemple au moyen d'une colle polymérisable déposée sur la partie périphérique de la face 28 extérieure de la paroi 14 transparente, assure l'étanchéité entre la paroi 14 transparente et la cuvette 30 dont l'ouverture 29 de visualisation comprend un rebord 24 rentrant, venant s'appuyer sur la partie périphérique de la face 28 de la paroi 14 transparente.

La cuvette 30 est munie latéralement d'un épaulement 25 sur lequel peut venir en appui le fond 26 de l'alésage taraudé de l'écrou 6 prévu pour venir se visser sur un filetage 12 périphérique du manchon 111, le rebord 32 de la cuvette 30 venant alors en appui, avec une pression déterminée, sur la face 8 du manchon 111 ce qui assure un contact rigide entre la cuvette 30 et le manchon 111, contact qui ne peut se modifier au cours du temps.

Il est à noter que le manchon 111 cylindrique présente intérieurement, comme le manchon 11, la forme d'un cône allant en s'élargissant vers l'enceinte 10 hermétique, l'angle $\alpha$ des génératrices de ce cône avec l'axe XX étant fonction de la viscosité du liquide L contenu dans l'enceinte 10. De cette façon, le liquide L contenu dans le manchon 111 peut s'écouler totalement lorsque le niveau de ce liquide L présent dans l'enceinte 10 atteint la partie inférieure du manchon 111, évitant ainsi toute erreur de lecture de niveau.

Il est à noter aussi qu'un écran 19 polygonal, de couleur claire, est placé dans le manchon 111 qui présente, à cet effet, un alésage 20 cylindrique sur lequel viennent s'appuyer les angles abattus de l'écran 19.

Il est à noter aussi que, comme dans l'exemple de réalisation précédemment cité, la paroi inférieure du manchon 111 est munie de rainures 18 longitudinales, de préférence semi-cylindriques, comme montré en figure 4 pour le manchon 11.

## Revendications

1. Voyant indicateur de niveau d'un liquide contenu dans une enceinte étanche (10), comprenant un manchon (11; 111), d'axe XX horizontal, fixé par l'une de ses extrémités, de façon rigide et étanche, sur l'enceinte (10), et une paroi (14) transparente et plane adaptée de façon étanche sur l'autre extrémité du manchon, caractérisé en ce que le manchon (11; 111) a une paroi intérieure qui, au moins dans sa partie inférieure, d'une part présente une pente descendante en direction de l'enceinte, cette pente faisant, avec un axe XX horizontal, un angle $\alpha$ dont la valeur est fonction de la viscosité du liquide contenu dans l'enceinte (10) et d'autre part est munie de rainures (18) longitudinales.

2. Voyant indicateur de niveau de liquide suivant la revendication 1, caractérisé en ce que la paroi intérieure du manchon (11; 111) a la forme d'un tronc de cône d'axe XX horizontal, allant en s'élargissant vers l'enceinte (10) étanche.

3. Voyant indicateur de niveau de liquide suivant la revendication 1, caractérisé en ce que les rainures (18) ont une section semi-circulaire.

4. Voyant indicateur de niveau de liquide suivant l'une quelconque des revendications 1 et 2, caractérisé en ce que la paroi transparente est un disque (14) disposé entre deux joints (15, 16) d'étanchéité de forme annulaire, et placé contre la face de l'extrémité libre du manchon (11), et en ce qu'un écrou (17) de serrage muni d'un taraudage (13) intérieur destiné à coopérer avec un filetage (12) extérieur du manchon (11), permet d'appliquer de façon étanche le disque (14) contre la face de l'extrémité libre du manchon (11).

5. Voyant indicateur de niveau de liquide suivant la revendication 4, caractérisé en ce que la paroi (14) est placée dans une cuvette (30) cylindrique, et en ce qu'un contact rigide est réalisé entre le rebord (32) de la cuvette (30) et l'autre extrémité (8) du manchon (111) qui lui fait face afin de limiter, au moment du montage du voyant, l'écrasement d'un joint (15) élastique d'étanchéité disposé entre la paroi (14) et l'autre extrémité (8) du manchon (111).

6. Voyant indicateur de niveau de liquide suivant la revendication 5, caractérisé en ce que le rebord (32) de la cuvette (30) est prévu pour venir en appui sur l'autre extrémité (8) du manchon (111) de façon à créer ce contact rigide.

7. Voyant indicateur de niveau de liquide suivant le revendication 6, caractérisé en ce que la face de l'autre l'extrémité (8) du manchon (111) et le rebord (32) de la cuvette (30) sont munis, l'un d'une gorge (21) annulaire d'axe XX et l'autre d'une saillie (31) annulaire d'axe XX, la saillie (31) étant prévue pour venir s'introduire dans la gorge (21) et assurer le centrage de la cuvette (30) sur le manchon (111).

8. Voyant indicateur de niveau de liquide suivant la revendication 7, caractérisé en ce qu'un joint (23) annulaire d'étanchéité est placé dans la gorge (21).

9. Voyant indicateur de niveau de liquide suivant l'une quelconque des revendications 5 à 8, caractérisé en ce que la cuvette (30) est munie, sur sa face opposée au rebord (32), d'une ouverture (29) de visualisation, cette ouverture (29) présentant un rebord (24) rentrant destiné à venir en appui sur la paroi (14) transparente.

10. Voyant indicateur de niveau de liquide suivant la revendication 9, caractérisé en ce que, entre la paroi (14) transparente et le rebord (24) rentrant, est interposé un joint (9) annulaire.

11. Voyant indicateur de niveau de liquide suivant la revendication 10, caractérisé en ce que le joint (9) est une colle polymérisable.

12. Voyant indicateur de niveau de liquide suivant l'une quelconque des revendications 5 à 11, caractérisé en ce qu'un écrou (6) est prévu pour venir coiffer la cuvette (30) et se visser sur le manchon (111) pourvu, à cet effet, d'un filetage (12) latéral, cet écrou (6) permettant d'appliquer le rebord (32) de la cuvette (30) sur l'autre l'extrémité (8) du manchon (111).

13. Voyant indicateur de niveau de liquide suivant l'une quelconque des revendications 1 à 12, caractérisé en ce qu'un écran (19) rigide, de couleur claire, de forme polygonale, destiné à améliorer la visualisation du niveau du liquide, est placé dans le manchon (11, 111), perpendiculairement à l'axe XX.

14. Voyant indicateur de niveau de liquide suivant la revendication 13, caractérisé en ce que l'écran (19) présente des angles abattus.

15. Voyant indicateur de niveau de liquide suivant les revendications 2 et 13, caractérisé en ce que le manchon (11, 111), comporte, sur une portion de sa paroi intérieure tronconique, un alésage (20) cylindrique, de section circulaire, destiné à recevoir l'écran (19) qui vient s'inscrire dans cet alésage (20).

16. Cuve de compresseur hermétique, caractérisé en ce qu'elle est muni d'un voyant de niveau de liquide suivant l'une quelconque des revendications 1 à 15.

**Patentansprüche**

1. Sichtfenster zum Erkennen der Höhe des Standes der Flüssigkeit in einem dichten Behälter (10), das eine Muffe (11; 111) mit waagerechter Achse XX, die mit einem ihrer Enden starr und dicht am Behälter (10) befestigt ist, und eine am anderen Ende der Muffe dicht angeordnete duchsichtige und ebene Wand (14) aufweist, dadurch gekennzeichnet, daß die Muffe (11; 111) eine Innenwand aufweist, die mindestens in ihrem unteren Teil einerseits eine in Richtung des Behälters nach unten gerichtete Neigung aufweist, wobei diese Neigung mit einer waagerechten Achse XX einen Winkel $\alpha$ bildet, dessen Größe von der Viskosität der im Behälter (10) enthaltenen Flüssigkeit abhängt, und die Innenwand andererseits mit Längsnuten (18) versehen ist.

2. Flüssigkeitsstandsichtfenster nach Anspruch 1, dadurch gekennzeichnet, daß die Innenwand der Muffe (11; 111) die Form eines sich in Richtung auf den dichten Behälter (10) erweiternden Kegelstumpfes mit waagerechter Achse XX hat.

3. Flüssigkeitsstandsichtfenster nach Anspruch 1, dadurch gekennzeichnet, daß die Nuten (18) einen halbkreisförmigen Querschnitt haben.

4. Flüssigkeitsstandsichtfenster nach einem der Ansprüche 1 und 2, dadurch gekennzeichnet, daß die durchsichtige Wand eine Scheibe (14) ist, die zwischen zwei Ringdichtungen (15, 16) angeordnet ist und gegen die Stirnseite des freien Endes der Muffe (11) anliegt, und daß eine Druckmutter (17) mit einem Innengewinde (13), das mit einem Außengewinde (12) der Muffe (11) zusammenwirkt, dazu dient, die Scheibe (14) gegen die Stirnseite des freien Endes der Muffe (11) dicht anzudrücken.

5. Flüssigkeitsstandsichtfenster nach Anspruch 4, dadurch gekennzeichnet, daß die Wand (14) in eine zylindrische Schale (30) eingesetzt ist und daß eine starre Berührung zwischen der Randleiste (32) der Schale (30) und dem anderen, der Schale gegenüberliegenden Ende (8) der Muffe (111) hergestellt wird, um zum Zeitpunkt der Montage des Sichtfensters die Stauchung einer zwischen der Wand (14) und dem anderen Ende (8) der Muffe (111) angeordneten elastischen Dichtung (15) zu begrenzen.

6. Flüssigkeitsstandsichtfenster nach Anspruch 5, dadurch gekennzeichnet, daß die Randleiste (32) der Schale (30) so ausgebildet ist, daß sie gegen das andere Ende (8) der Muffe (111) angedrückt wird, um die starre Berührung zu erzeugen.

7. Flüssigkeitsstandsichtfenster nach Anspruch 6, dadurch gekennzeichnet, daß von der Stirnseite des anderen Endes (8) der Muffe (111) und von der Randleiste (32) der Schale (30) die eine mit einer Ringnut (21) mit der Achse XX und die andere mit einem ringförmigen Vorsprung (31) mit der Achse XX versehen sind, wobei der Vorsprung (31) zum Eingreifen in die Nut (21) und zum Zentrieren der Schale (30) auf der Muffe (111) bestimmt ist.

8. Flüssigkeitsstandsichtfenster nach Anspruch 7, dadurch gekennzeichnet, daß in die Nut (21) eine Ringdichtung (23) eingesetzt ist.

9. Flüssigkeitsstandsichtfenster nach einem der Ansprüche 5 bis 8, dadurch gekennzeichnet, daß die Schale (30) auf ihrer der Randleiste (32) gegenüberliegenden Seite mit einer Sehöffnung (29) versehen ist, die eine rückspringende Randleiste (24) aufweist, die in Andruck gegen die durchsichtige Wand (14) kommt.

10. Flüssigkeitsstandsichtfenster nach Anspruch 9, dadurch gekennzeichnet, daß zwischen die durchsichtige Wand (14) und die rückspringende Randleiste (24) eine Ringdichtung (9) eingesetzt ist.

11. Flüssigkeitsstandsichtfenster nach Anspruch 10, dadurch gekennzeichnet, daß die Dichtung (9) ein polymerisierbarer Klebstoff ist.

12. Flüssigkeitsstandsichtfenster nach einem der Ansprüche 5 bis 11, dadurch gekennzeichnet, daß eine Mutter (6) vorgesehen ist, welche die Schale (30) übergreift und auf die Muffe (111) aufschraubbar ist, die zu diesem Zweck mit einem seitlichen Gewinde versehen ist, wobei diese Mutter (6) das Andrücken der Randleiste (32) der Schale (30) auf das andere Ende (8) der Muffe (111) ermöglicht.

13. Flüssigkeitsstandsichtfenster nach einem der Ansprüche 1 bis 12, dadurch gekennzeichnet, daß ein starrer Schirm (19) von heller Farbe und mehreckiger Form zur Verbesserung des Erkennens des Flüssigkeitsstandes in die Muffe (11; 111) senkrecht zur Achse XX eingesetzt ist.

14. Flüssigkeitsstandsichtfenster nach Anspruch 13, dadurch gekennzeichnet, daß der Schirm (19) abgekantete Ecken aufweist.

15. Flüssigkeitsstandsichtfenster nach den Ansprüchen 2 und 13, dadurch gekennzeichnet, daß die Muffe (11; 111) über einen Teil ihrer kegelstumpfförmigen Innenwand eine zylindrische Bohrung (20) mit kreisförmigem Querschnitt zur Aufnahme des Schirmes (19), der in diese Bohrung (20) paßt, aufweist.

16. Hermetisches Kompressorgehäuse, dadurch gekennzeichnet, daß es mit einem Flüssigkeitsstandsichtfenster nach einem der Ansprüche 1 bis 15 versehen ist.

## Claims

1. Inspection port for indicating the liquid level in a hermetic container (10), comprising a sleeve (11; 111) having a horizontal axis XX and being rigidly and hermetically mounted with one of its ends to the container (10) and having a transparent and planar wall (14) hermetically provided at the other end of the sleeve, characterised in that the sleeve (11; 111) includes an interior wall which, on the one hand, at least in the lower portion thereof has a downward inclination directed towards the container, said inclination including an angle $\alpha$ with a horizontal axis XX, the magnitude of said angle depending on the viscosity of the liquid present in the container (10), and said interior wall being provided, on the other hand, with longitudinally extending grooves (18).

2. Liquid level inspection port as claimed in claim 1, characterised in that the interior wall of the sleeve (11; 111) is configured as a truncated cone having a horizontal axis XX and widening towards the hermetic container (10).

3. Liquid level inspection port as claimed in claim 1, characterised in that the grooves (18) have semi-circular cross-section.

4. Liquid level inspection port as claimed in one of the claims 1 and 2, characterised in that the transparent wall is a disc (14) which is disposed between two O-rings (15, 16) and engages the face of the free end of the sleeve (11), and that a clamping nut (17), which has internal threads (13) for cooperation with external threads (12) on the sleeve (11), is used to sealingly urge the disc (14) against the face of the free end of the sleeve (11).

5. Liquid level inspection port as claimed in claim 4, characterised in that the wall (14) is inserted into a cylindrical cup (30), and that rigid contact between the skirt (32) of the cup (30) and the other end (8) of the sleeve opposite the cup is made so that at the time of mounting of the inspection port the compression of an elastic sealing member (15) disposed between the wall (14) and the other end (8) of the sleeve (111) is limited.

6. Liquid level inspection port as claimed in claim 5, characterised in that the skirt (32) of the cup (30) is configured such that it is urged against the other end (8) of the sleeve (111) in order to bring about said rigid contact.

7. Liquid level inspection port as claimed in claim 6, characterised in that of the face of said other end (8) of the sleeve (111) and of the skirt (32) of said cup (30) one is provided with an annular groove (21) having the axis XX, while the other one is provided with an annular projection (31) having the axis XX, said projection (31) being adapted to engage in said groove (21) and to centre the cup (30) on the sleeve (111).

8. Liquid level inspection port as claimed in claim 7, characterised in that an O-ring (23) is inserted in said groove (21).

9. Liquid level inspection port as claimed in any of the claims 5 to 8, characterised in that the side of the cup (30) remote from the skirt (32) is provided with an inspection aperture (29) having a recessed skirt (24) adapted to be urged against the transparent wall (14).

10. Liquid level inspection port as claimed in claim 9, characterised in that an O-ring (9) is inserted intermediate the transparent wall (14) and the recessed skirt (24).

11. Liquid level inspection port as claimed in claim 10, characterised in that the O-ring (9) is made of a polymerisable adhesive.

12. Liquid level inspection port as claimed in any of the claims 5 to 11, caracterised in that a nut (6) is provided for engaging about the cup (30) and for being threaded onto the sleeve (111) which to this end is provided with a lateral threaded portion, said nut (6) permitting urging of the skirt (32) of the cup (30) onto the other end (8) of the sleeve (111).

13. Liquid level inspection port as claimed in any of the claims 1 to 12, characterised in that a clear-coloured polygonal rigid screen (19) for improving identification of the liquid level is inserted into the sleeve (11; 111) perpendicularly to the axis XX.

14. Liquid level inspection port as claimed in claim 13, characterised in that the screen (19) is formed with bevelled edges.

15. Liquid level inspection port as claimed in the claims 2 and 13, characterised in that the sleeve (11; 111) is provided across part of its frusto-conical interior wall with a cylindrical bore (20) of circular cross-section for receiving the screen (19) adapted to fit into said bore (20).

16. Hermetic compressor casing, characterised in that it is provided with a liquid level inspection port as claimed in any of the claims 1 to 15.

0 068 971

FIG_1

FIG_2

FIG_3

FIG_4

FIG_5

7

# FIG_6

# FIG_7